# EUROPÄISCHE PATENTANMELDUNG

(11) **EP 2 881 713 A1**
(43) Veröffentlichungstag der Anmeldung: **10.06.2015**
(21) Anmeldenummer: 14196984.0
(22) Anmeldetag: 09.12.2014
(51) Int. Cl.: G01D 5/14, G01D 5/244, G01D 5/16, G01P 3/487

(54) **Untersuchen eines Drehzahlsensors auf Neigung zum Flippen**

(30) Priorität: 09.12.2013 DE 102013225316
(71) Anmelder: Continental Teves AG & Co. oHG, 60488 Frankfurt (DE)
(72) Erfinder: Eckrich, Jörg, 65201 Wiesbaden (DE); Brüggemann, Stephan, 60431 Frankfurt/Main (DE)

(57) **Zusammenfassung**

Die Erfindung betrifft ein Verfahren zum Untersuchen eines magnetischen Stützfeldes (22) in einem Drehzahlsensor (5), das eingerichtet ist, eine Vormagnetisierung (57) eines magnetoresitiven Messaufnehmers (14) in einer schweren Achse des magnetoresitiven Messaufnehmers (14) zu schwächen, wobei der magnetoresistive Messaufnehmer (14) eingerichtet ist, seinen elektrischen Widerstand (20) in Abhängigkeit eines sich in Richtung seiner leichten Achse mit einer zu erfassenden Drehzahl (6) drehenden Encoderrades (13) zu ändern, umfassend:
- Beaufschlagen eines magnetischen Testfeldes (29) auf das magnetische Stützfeld (22), und
- Untersuchen des beaufschlagten magnetischen Stützfeldes (22) basierend auf einer Gegenüberstellung eines vom elektrischen Widerstand (20) des magnetoresitiven Messaufnehmers (14) abhängigen Ausgangssignals (31) und einer einen Fehler (38, 39) für das magnetische Stützfeld (22) beschreibenden vorbestimmten Bedingung (38, 39).

## Beschreibung

Die Erfindung betrifft ein Verfahren zum Prüfen eines in einem Drehzahlsensor verbauten Stützmagneten, eine Steuervorrichtung zur Durchführung des Verfahrens und einen Sensor mit der Steuervorrichtung.

Aus der WO 2007 014 947 A1 ist ein Drehzahlsensor zur Erfassung einer Drehzahl basierend auf einem sich mit der Drehzahl drehenden magnetischen Encoderfeld über einen magnetoresistiven Messaufnehmer bekannt. In diesem Drehzahlsensor ist eine nachstehend Lesekennlinie genannte Abhängigkeit eines elektrischen Widerstandes des magnetoresitiven Messaufnehmers vom magnetischen Encoderfeld über einen Wertebereich des magnetischen Encoderfeldes linearisiert. Diese Linearisierung ist möglich, weil einem Strom durch den magnetoresisitiven Messaufnehmer ein Stromdichtevektor aufgezwungen ist, der in einem Winkel von 45° zur Vorzugsrichtung des magnetostriktiven Messaufnehmers und damit seiner leichten Achse liegt. In dem Drehzahlsensor ist der Messaufnehmer dabei so angeordnet, dass die Vorzugsrichtung in die Bewegungsrichtung des magnetischen Encoderfeldes gelegt. In diesem Drehzahlsensor wird ferner die Verwendung eines Stützmagneten vorgeschlagen, der die sensorischen Eigenschaften des Drehzahlsensors nur unwesentlich beeinflussen soll.

Es ist Aufgabe der Erfindung, den bekannten Drehzahlsensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Untersuchen eines magnetischen Stützfeldes in einem Drehzahlsensor, das eingerichtet ist, eine Vormagnetisierung eines magnetoresitiven Messaufnehmers in einer schweren Achse des magnetoresitiven Messaufnehmers zu schwächen, wobei der magnetoresistive Messaufnehmer eingerichtet ist, seinen elektrischen Widerstand in Abhängigkeit eines sich in Richtung seiner leichten Achse mit einer zu erfassenden Drehzahl drehenden Encoderrades zu ändern, die Schritte Beaufschlagen eines magnetischen Testfeldes auf das magnetische Stützfeld, und Untersuchen des magnetischen Stützfeldes basierend auf einer Gegenüberstellung eines vom elektrischen Widerstand des magnetoresitiven Messaufnehmers abhängigen Ausgangssignals und einer einen Fehler für das magnetische Stützfeld beschreibenden vorbestimmten Bedingung.

Dem angegebenen Verfahren liegt die Überlegung zugrunde, dass der Stützmagnet in dem eingangs genannten Drehzahlsensor verwendet werden könnte, um die Steigung seiner Lesekennlinie und damit die Empfindlichkeit des magnetorsisitiven Messaufnehmers zu erhöhen. Dies könnte dadurch erreicht werden, dass sein magnetisches Stützfeld so angeordnet wird, dass es der intrinsischen Vormagnetisierung des magnetostresistiven Messaufnehmers in seiner schweren Ackse entgegenwirkt. Ein fehlerhaftes magnetisches Stützfeld, das beispielsweise durch einen fehlerhaft ausgerichteten oder überalterten Stützmagneten verursacht werden könnte, könnte dann aber auch zu einem ungewollten Verhalten des magnetoresistiven Messaufnehmers führen. Dies kann zu einer fehlerhaften Erfassung der Drehzahl führen, die beispielsweise bei einem Einsatz in einem Fahrzeug als Raddrehzahlsensor sicherheitskritisch sein könnte. Hier könnte insbesondere die ASIL-Sicherheitsanforderungsstufe der ISO 26262-Norm verletzt werden, im Rahmen derer die funktionale Sicherheit eines Systems mit elektrischen und/oder elektronischen Komponenten im Kraftfahrzeug zu gewährleisten ist.

Hier greift das angegebene Verfahren mit der Überlegung an, das magnetische Stützfeld auf Fehler hinzu untersuchen. Da die Lesekennlinie vom Stützmagneten und seinem magnetischen Stützfeld abhängig sind, kann die Abhängigkeit durch variieren dieses untersucht werden. Daher wird vorgeschlagen, durch Beaufschlagen des magnetischen Stützfeldes mit einem magnetischen Testfeld, eine Veränderung des am magnetoresistiven Messaufnehmer anliegende Magnetfeldes wie eine Dämpfung und/oder eine Depositionierung des magnetischen Stützfeldes zu simulieren und die Reaktion des von der Lesekennlinie abhängigen Ausgangssignals des Drehzahlsensors zu beobachten. Anhand der Reaktion des Ausgangssignals können verschiedene Aussagen über den Stützmagneten getroffen werden, wie beispielsweise ob dieser lagerichtig angeordnet ist, ob der Drehzahlsensor eventuell leichte Lageverschiebungen des Stützmagneten noch zulässt, ob das magnetische Stützfeld noch ausreichend hoch ist, und so weiter. Auf diese Weise kann der Stützmagnet im Drehzahlsensor stets auf seinen fehlerfreien Einsatz hin getestet und die Ausfallsicherheit des Drehzahlsensors gesteigert werden.

In einer Weiterbildung des angegebenen Verfahrens besitzt die Abhängigkeit des elektrischen Widerstandes des magnetoresistiven Messaufnehmers vom Encoderrad einen Umkehrpunkt, ab dem eine Änderung des elektrischen Widerstandes in Abhängigkeit eines magnetischen Encoderfeldes des Encoderrades in Richtung der schweren Achse gegenüber einer Änderung des elektrischen Widerstandes in Abhängigkeit des magnetischen Encoderfeldes in Richtung der leichten Achse sein Vorzeichen ändert.

Dieser Weiterbildung liegt die Überlegung zugrunde, die Vormagnetisierung des magnetoresistiven Messaufnehmers in der schweren Achse für eine möglichst steile Lesekennlinie, das heißt für eine hohe Empfindlichkeit, möglichst nahe bei Null liegen sollte. Der Stützmagnet sollte mit seinem magnetischen Stützfeld daher eine intrinsische Vormagnetisierung des magnetoresistiven Messaufnehmers in der schweren Achse nahe an Null heranführen. Jedoch kann die Vormagnetisierung des magnetoresistiven Messaufnehmers in der schweren Achse in diesem Zustand durch leichte Änderungen des Magnetfeldes am magnetoresistiven Messaufnehmer in der schweren Achse leicht das Vorzeichen wechseln und zu einem Kippen der Lesekennlinie führen. Dies soll nachstehend als Flippen bezeichnet werden. Dieses Flippen hat den Nachteil, dass sich mit der achsengespiegelten Lesekennlinie der Signalverlauf des Ausgangssignals in Abhängigkeit der zu messenden Drehzahl invertiert, wodurch die zu messende Drehzahl im Ausgangssignal verdoppelt werden kann. Eine solche Drehzahlverdopplung wäre ein Beispiel für einen oben genannten Fehler, der beispielsweise durch eine fehlerhafte Positionierung des Stützmagneten entsteht und durch das angegebene Verfahren gefunden werden könnte. In einer Fahrdynamiksteuerung könnte dieser Fehler beispielsweise fälschlicherweise ein nicht existierendes Gieren des Fahrzeuges andeuten.

Um diesen Fehler zu finden könnte an den magnetoresistiven Messaufnehmer ein in der leichten Achse des magnetoresistiven Messaufnehmers wirkendes magnetisches Wechselfeld angelegt werden, dass die zu messende Drehzahl simuliert. Währenddessen kann der Stützmagnet mit seinem magnetischen Stützfeld in der schweren Achse des magnetoresistiven Messaufnehmers wirken, wobei als genannte vorbestimmte Bedingung ein Frequenzsprung in dem periodischen Ausgangssignal festgelegt werden könnte, der auf das zuvor beschriebene Flippen des magnetoresisitiven Messaufnehmers und damit des Drehzahlsensors hindeutet.

Ein möglicher Ablauf der Untersuchung des Stützmagneten im Rahmen des angegebenen Verfahrens könnte dadurch realisiert werden, dass das magnetische Testfeld solange variiert wird, bis das Ausgangssignal die vorbestimmte Bedingung erfüllt. Das heißt, dass wenn beispielsweise die vorbestimmte Bedingung das zuvor beschriebene Flippen ist, könnte das magnetische Stützfeld solange durch Erhöhen oder Senken variiert werden, bis im Ausgangssignal des Drehzahlsensors durch eine Frequenzverdopplung das Flippen erkennbar ist.

Dabei könnte in einer besonders bevorzugten Ausführung des angegebenen Verfahrens ein die Lage des magnetischen Stützfeldes gegenüber dem magnetoresistiven Messaufnehmers beschreibender Reservewert ausgegeben werden, der von der Höhe des magnetischen Testfeldes bei der Erfüllung der vorbestimmten Bedingung durch das Ausgangssignal abhängig ist. Dieser Weiterbildung liegt die Überlegung zugrunde, dass der Stützmagnet nicht nur auf Fehler selbst, sondern auch auf seine Robustheit gegenüber Fehler hin untersucht werden könnte. Je höher der Reservewert ist, desto geringer ist die Wahrscheinlichkeit, dass ein der vorbestimmten Bedingung zugeordneter Fehler wie das Flippen beispielsweise aufgrund einer geringen unbeabsichtigten Depositionierung des Stützmagneten auftritt.

Prinzipiell kann das magnetische Testfeld beliebig an den magnetoresisistiven Messaufnehmer angelegt werden. Besonders bevorzugt wird das magnetische Testfeld jedoch basierend auf einem elektrischen Strom durch einen elektrischen Testleiter erregt. Der Vorteil ist, dass ein derartiger Testleiter platzsparend sogar intern in dem Drehzahlsensor untergebracht werden kann, der in der Endapplikation verbaut ist. Auf diese Weise kann der Drehzahlsensor während seines Betriebes in der Applikation auf Fehler hin untersucht und beispielsweise das Ausgangssignal des Drehzahlsensors im Fehlerfalle als fehlerhaft gekennzeichnet werden.

Gemäß einem weiteren Aspekt der Erfindung ist eine Vorrichtung zum Untersuchen eines magnetischen Stützfeldes in einem Drehzahlsensor eingerichtet, eines der angegebenen Verfahren durchzuführen.

In einer Weiterbildung der angegebenen Vorrichtung weist die angegebene Vorrichtung einen Speicher und einen Prozessor auf. Dabei ist eines angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die angegebene Vorrichtung kann dabei als Teststation im Rahmen des Fertigungsprozesses des Drehzahlsensors oder als Zusatzelement für den fertigen Drehzahlsensor ausgebildet sein. Besonders bevorzugt ist dabei der zuvor genannte elektrische Testleiter in der angegebenen Vorrichtung mit aufgenommen.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Drehzahlsensor einen magnetischen Encoder zum Erregen eines magnetischen Encoderfeldes in Abhängigkeit einer zu erfassenden Drehzahl, einen Lesekopf mit einem magnetostriktiven Messaufnehmer zum Abgeben eines Ausgangssignals in Abhängigkeit des magnetischen Encoderfeldes und des magnetostriktiven Messaufnehmers, einen das magnetische Stützfeld erregenden Stützmagneten, der eine Empfindlichkeit des magnetostriktiven Messaufnehmers beeinflusst, und eine der angegebenen Vorrichtungen zum Untersuchen eines magnetischen Stützfeldes in einem Drehzahlsensor.

In einer besonderen Weiterbildung ist der angegebene Sensor ein Raddrehzahlsensor.

Gemäß einem weiteren Aspekt der Erfindung umfasst ein Fahrzeug einen angegebenen Raddrehzahlsensor.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Drehzahlsensors in der Fahrdynamikregelung der Fig. 1,
Fig. 3 ein Diagramm zum Darstellen eines Verlaufes eines Ausgangssignals aus dem Drehzahlsensor,
Fig. 4 Verläufe von Lesekennlinien eines magnetoresistiven Messaufnehmers in dem Drehzahlsensor der Fig. 2, die in Abhängigkeit eines Magnetfeldes in der schweren Achse aufgetragen sind, wobei jede Lesekennlinie die Abhängigkeit des elektrischen Widerstandes des magnetoresistiven Messaufnehmers über ein in der leichten Achse wirkendes Magnetfeld beschreibt,
Fig. 5 den Verlauf des elektrischen Widerstandes des magnetoresistiven Messaufnehmers in Abhängigkeit eines sich in der leichten und schweren Achse des magnetoresistiven Messaufnehmers verändernden Magnetfeldes,
Fig. 6 den Verlauf des elektrischen Widerstandes des magnetoresistiven Messaufnehmers in Abhängigkeit eines sich in der leichten und schweren Achse des magnetoresistiven Messaufnehmers verändernden Magnetfeldes, wenn ein magnetisches Stützfeld in einer ersten Höhe angelegt ist,
Fig. 7a in einer Draufsicht einen Lesekopf mit einem Messaufnehmer des Drehzahlsensors aus Fig. 1 mit einem Teststromleiter,
Fig. 7b den Messaufnehmer der Fig. 7a mit dem Teststromleiter in einer Seitenansicht,
Fig. 8a in einer Draufsicht den Lesekopf mit dem Messaufnehmer des Drehzahlsensors aus Fig. 1 mit einem weiteren Teststromleiter,
Fig. 8b den Messaufnehmer der Fig. 8a mit dem weiteren Teststromleiter in einer Seitenansicht,
Fig. 9a in einer Draufsicht den Lesekopf mit mehreren Messaufnehmern des Drehzahlsensors aus Fig. 1 mit einem noch weiteren Teststromleiter,
Fig. 9b die Messaufnehmer der Fig. 9a mit dem noch weiteren Teststromleiter in einer Seitenansicht,
Fig. 10 eine Schaltung zur Bestromung des Teststromleiters der Fig. 7a bis 9b; und
Fig. 11 einen Teil der Schaltung aus Fig. 10 in einer Weiterbildung zeigen.

In den Figuren werden gleiche technische Elemente mit gleichen Bezugszeichen versehen und nur einmal beschrieben.

Nachstehend soll die Erfindung in nicht einschränkender Weise anhand eines in einem Fahrzeug 2 verwendeten Raddrehzahlsensor 10 näher beschrieben werden.

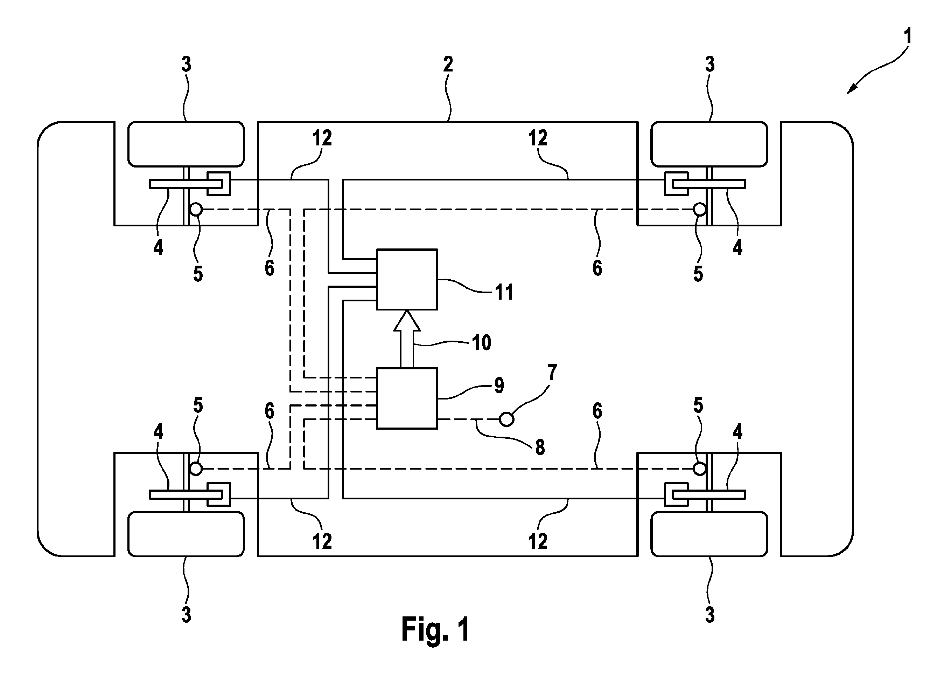

Es wird auf Fig. 1 Bezug genommen, die eine schematische Ansicht des Fahrzeuges 1 mit einer an sich bekannten Fahrdynamikregelung zeigt. Details zu dieser Fahrdynamikregelung können beispielsweise der DE 10 2011 080 789 A1 entnommen werden.

Das Fahrzeug 1 umfasst ein Chassis 2 und vier Räder 3. Jedes Rad 3 kann über eine ortsfest am Chassis 2 befestigte Bremse 4 gegenüber dem Chassis 2 verlangsamt werden, um eine Bewegung des Fahrzeuges 1 auf einer nicht weiter dargestellten Straße zu verlangsamen.

Dabei kann es in einer dem Fachmann bekannten Weise passieren, dass das die Räder 3 des Fahrzeugs 1 ihre Bodenhaftung verlieren und sich das Fahrzeug 1 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 1 dafür Drehzahlsensoren 5 an den Rädern 3 auf, die eine Drehzahl 6 der Räder 3 erfassen. Ferner weist das Fahrzeug 1 einen Inertialsensor 7 auf, der Fahrdynamidaten 8 des Fahrzeuges 1 erfasst aus denen beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben werden kann.

Basierend auf den erfassten Drehzahlen 6 und Fahrdynamikdaten 8 kann ein Reglers 9 in einer dem Fachmann bekannten Weise bestimmen, ob das Fahrzeug 1 auf der Fahrbahn rutscht oder sogar von der oben genannten vorgegebenen Trajektorie abweicht und entsprechen mit einem an sich bekannten Reglerausgangssignal 10 darauf reagieren. Das Reglerausgangssignal 10 kann dann von einer Stelleinrichtung 11 verwendet werden, um mittels Stellsignalen 12 Stellglieder, wie die Bremsen 4 anzusteuern, die auf das Rutschen und die Abweichung von der vorgegebenen Trajektorie in an sich bekannter Weise reagieren.

Der Regler 9 kann beispielsweise in eine an sich bekannte Motorsteuerung des Fahrzeuges 1 integriert sein. Auch können der Regler 9 und die Stelleinrichtung 11 als eine gemeinsame Regeleinrichtung ausgebildet und optional in die zuvor genannte Motorsteuerung integriert sein.

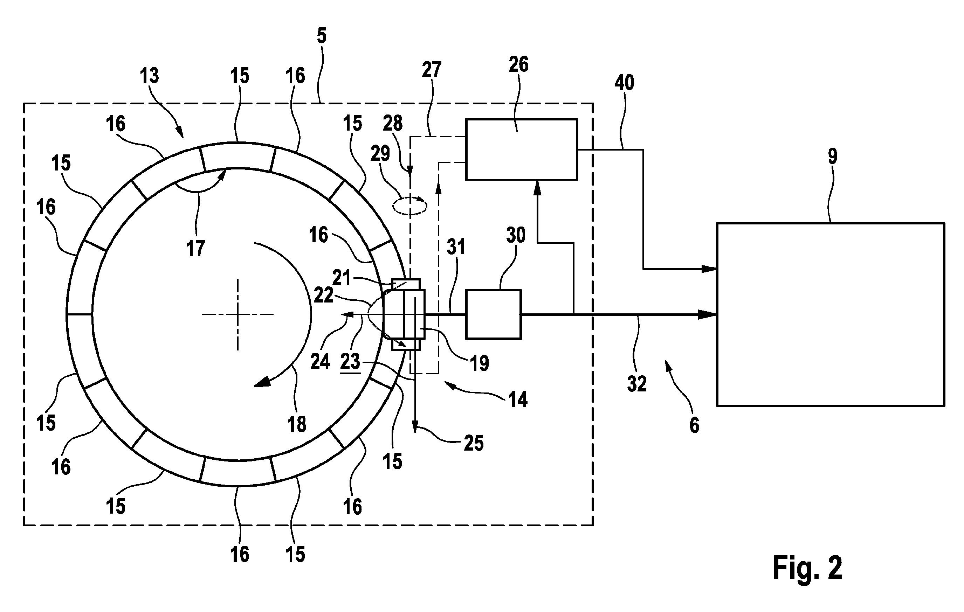

Es wird auf Fig. 2 Bezug genommen, die eine schematische Ansicht einer der Drehzahlsensoren 5 in der Fahrdynamikregelung der Fig. 1 zeigt.

Der Drehzahlsensor 5 ist in der vorliegenden Ausführung als aktiver Drehzahlsensor ausgeführt, der eine drehfest am Rad 3 befestigte Encodersscheibe 13 und einen ortsfest zum Chassis 2 befestigen Lesekopf 14 umfasst.

Die Encoderscheibe 13 besteht in der vorliegenden Ausführung aus aneinandergereihten Magnetnordpolen 14 und Magnetsüdpolen 16, die gemeinsam ein mit einem beispielhaften Pfeil angedeutetes magnetisches Encoderfeld 17 erregen. Dreht sich die am Rad 3 befestigte Encoderscheibe 13 mit diesem in eine Drehrichtung 18, dreht sich das magnetische Encoderfeld 17 so mit.

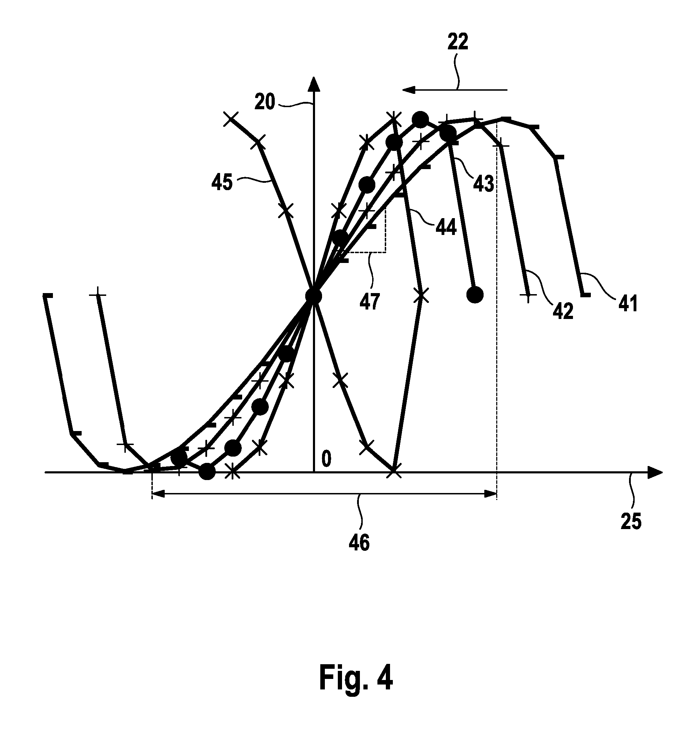

Der Lesekopf 14 umfasst in der vorliegenden Ausführung einen magnetorsistiven Messaufnehmer 19, der seinen in Fig. 4 mit dem Bezugszeichen 20 angedeuteten elektrischen Widerstand in Abhängigkeit des magnetischen Encoderfeldes 17 ändern soll. Da sich das magnetische Encoderfeld 17 mit dem Encoderrades 13 dreht, kann der elektrische Widerstand 20 so als von der Drehzahl 6 abhängige Messgröße herangezogen werden. In der vorliegenden Ausführung wird das magnetische Encoderfeld 17 ferner mit einem durch einen Stützmagneten 21 erregten magnetischen Stützfeld 22 überlagert, so dass an den magnetoresistiven Messaufnehmer 19 ein Summenmagnetfeld 23 anliegt, das gesehen in einer zur Drehrichtung 18 eine Radialkomponente 24 und eine Tangentalkomponente 25 aufweist.

Ferner ist in dem Drehzahlsensor 5 eine Testvorrichtung 26 angeordnet, die einen elektrischen Testleiter 27 mit einem Teststrom 28 bestromt, der ein magnetisches Testfeld 29 erregt. Der elektrische Testleiter 27 ist so gelegt, dass das magnetische Stützfeld 22 mit dem magnetischen Testfeld 29 beaufschlagt wird. Auf weitere Hintergründe zur Testvorrichtung 26 wird an späterer Stelle eingegangen.

An den magnetoresistiven Messaufnehmer 19 ist eine Signalaufbereitungsschaltung 30 angeschlossen, die an den magnetoresistiven Messaufnehmer 19 einen Prüfstrom in einer vorbestimmten Höhe anlegt. Der Prüfstrom ruft am magnetoresistiven Messaufnehmer 19 einen vom elektrischen Widerstand 20 abhängigen Spannungsabfall hervor. Dieser Spannungsabfall kann durch die Signalaufbereitungsschaltung 30 als vom elektrischen Widerstand 20 des magnetoresistiven Messaufnehmers 19 abhängiges Ausgangssignal 31 abgegriffen werden. Da sich der elektrische Widerstand 20 in Abhängigkeit des magnetischen Encoderfeldes 17 prinzipbedingt periodisch ändern muss, kann die Signalaufbereitungsschaltung 30 in einem Pulssignal 32 für jede aufgetretene Periode einen Puls ausgeben, wobei aus der Anzahl der Pulse pro Zeiteinheit unmittelbar die Drehzahl 6 abgeleitet werden kann. Das nach diesem Prinzip erzeugte Pulssignal 32 kann beispielsweise zu weiteren Verarbeitung an den Regler 9 ausgegeben werden.

In an sich bekannter Weise weist der magnetoresistive Messaufnehmer 19 eine leichte Achse auf, in der eine Veränderung des anliegenden Summenmagnetfeldes 23 die größte Änderung des elektrischen Widerstandes 20 hervorruft. Entsprechend weist der magnetoresistive Messaufnehmer 19 eine rechtwinklig dazu liegende schwere Achse auf, in der eine Veränderung des anliegenden Summenmagnetfeldes 23 die kleinste Änderung des elektrischen Widerstandes 20 hervorruft. Es sollte unmittelbar verständlich sein, dass der magnetoresisitive Messaufnehmer 19 mit seiner leichten Achse in Richtung der Tangentialkomponente 25 des Summenmagnetfeldes 23 ausgerichtet sein sollte, weil diese in die Drehrichtung 18 Encoderrades 13 zeigt.

Es ist wünschenswert, dass sich das Ausgangssignal 31 in Abhängigkeit des magnetischen Encoderfeldes 17 linear ändert, so dass beispielsweise aus dem Ausgangssignal 31 ersichtlich ist, ob sich unterhalb des Lesekopfes 14 ein Nordpol 15 oder ein Südpol 16 befindet. Jedoch ändert sich der elektrische Widerstandes 20 des magnetoresisitven Messaufnehmers 19 in der zuvor erläuterten Konfiguration des Lesekopfes über die Tangentialkomponente 25 des am magnetoresistiven Messaufnehmer 19 wirksamen Summenmagnetfeldes 23 wie in der WO 2007 014 947 A1 beschrieben quadratisch ab.

Wie aus weiter der WO 2007 014 947 A1 bekannt könnte der magnetoresistive Messaufnehmer 19 zur teilweisen Linearisierung der nichtlinearen Abhängigkeit des elektrischen Widerstandes 20 des magnetoresistiven Messaufnehmers 19 von der Tangentialkomponente 25 des Summenmagnetfeldes 23 beispielsweise mit der Barberpole-Technik so ausgebildet werden, dass ein Stromdichtevektor des oben genannten Prüfstroms durch den magnetoresisitven Messaufnehmer 19 in einem Winkel von 45° zur Vorzugsrichtung des magnetostriktiven Messaufnehmers 19, also seiner leichten Achse liegt. Mittels dem Stützmagneten 21 kann dabei die Empfindlichkeit des magnetostriktiven Messaufnehmers 19, also die Höhe der Änderung seines elektrischen Widerstandes 20 auf eine Änderung der Tangentialkomponente 25 des Summenmagnetfeldes, eingestellt werden, worauf an späterer Stelle näher eingegangen wird.

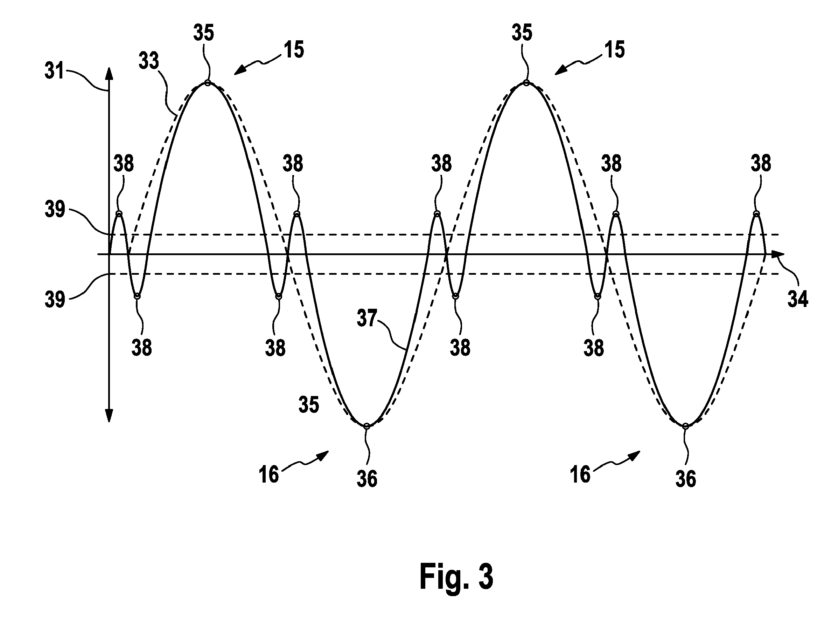

In Fig. 3 ist dabei in einer gestrichelten Linie ein gewünschter Signalverlauf 33 des Ausgangssignals 31 über die Zeit 34 aufgetragen. Deutlich zu sehen sind die positiven Maxima 35 und die negativen Minima 36, aus denen entsprechend erkennbar ist, ob unter dem magnetoresistiven Messaufnehmer 19 ein Nordpol 15 oder ein Südpol 16 liegt.

Es zeigt kann jedoch vorkommen, dass ein tatsächlicher Signalverlauf 37 deutlich vom gewünschten Signalverlauf 33 abweicht. Es hat sich gezeigt, dass diese Abweichungen durch den Stützmagneten 21 und/oder sein magnetisches Stützfeld 20 hervorgerufen werden. Dabei werden in das Ausgangssignal 31 Zusatzpulse 38 eingebracht, die je nach Höhe der Schaltschwellen 39 zur Erzeugung des Pulssignals 32 auch als Drehzahlpulse in diesem auftreten können. Der ein derartiges Pulssignal 32 erfassende Regler 9 würde dann aus dem Pulssignal 32 eine Drehzahl 6 ableiten, die doppelt so hoch ist, wie die tatsächliche Drehzahl. In dem Fahrzeug 1 der Fig. 1 würde dies bedeuten, dass wenn einer der Drehzahlsensoren 5 ein derartiges, zu einer doppelten Drehzahl 6 führendes Pulssignal 32 ausgibt, der Regler 9 für das Fahrzeug eine nicht vorhandene Gierbewegung des Fahrzeuges ableitet und entsprechend auf diese durch Stelleingriffe beispielsweise über die Bremsen reagiert.

Aus diesem Grund ist die Testvorrichtung 26 vorgesehen. Diese greift in der in der vorliegenden Ausführung das Pulssignal 32 ab. Alternativ oder zusätzlich könnte Testvorrichtung 26 auch das Ausgangssignal 31 abgreifen. Wichtig ist, dass Testvorrichtung 26 ein Signal im Drehzahlsensor 5 abgreift, das vom elektrischen Widerstand 20 des magnetoresistiven Messaufnehmers 19 abhängig ist. Basierend auf einer Gegenüberstellung des abgegriffenen Signals, i.e. des Pulssignals 32, und einer noch zu beschreibenden Fehlerbedingung für das magnetische Stützfeld 20 kann die Testvorrichtung 28 dann dem Regler 9 mit einem Fehlersignal 40 den Fehler des Stützmagneten 20 und damit die Ungültigkeit der mit dem Pulssignal 32 übertragenen Drehzahl 6 anzeigen.

Bevor auf die zuvor genannte Fehlerbedingung näher eingegangen wird, soll zunächst erläutert werden, wie es zu der Entstehung der Zusatzpulse 38 kommt. Dazu wird zunächst auf Fig. 4 Bezug genommen, die Verläufe von Lesekennlinien 41, 42, 43, 44 und 45 des magnetoresistiven Messaufnehmers 19 in dem Drehzahlsensor 5 der Fig. 2 zeigt, die in Abhängigkeit der Tangentialkomponente 25 aufgetragen sind.

Es soll zunächst als Grundlesekennlinie die Lesekennlinie 41 der Lesekennlinien 41, 42, 43, 44 und 45 betrachtet werden, deren Verlauf des elektrischen Widerstandes 20 des magnetoresistiven Messaufnehmers 19 über die Tangentialkomponente 25 des Summenmagnetfeldes 23 ohne den Stützmagneten 21 und seinem magnetischen Stützfeld 22 entspricht. Diese Grundlesekennlinie ist in Fig. 4 die Lesekennlinie 41, die am stärksten in Richtung der Achse der Tangentialkomponente 25 des Summenmagnetfeldes 23 gestreckt ist. Innerhalb eines Linearbereichs 46 kann diese Grundlesekennlinie 41 als über die Tangentialkomponente 25 des Summenmagnetfeldes 23 mit einer Steigung 47 linear verlaufend angesehen werden.

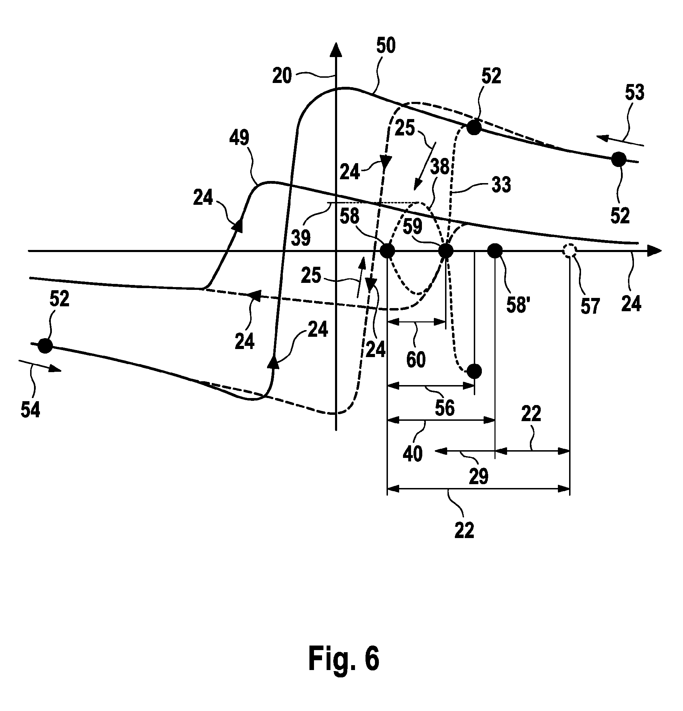

Die Grundlesekennlinie 41 des magnetoresistiven Messaufnehmers 19 kann dabei durch das magnetische Stützfeld 22 des Stützmagneten 21 in Richtung der Achse des elektrischen Widerstandes 20 gestaucht werden. Dies kann anhand der Formel der Fig. 6 der WO 2007 014 947 A1 nachvollzogen werden. Mit der durch die Stauchung der Grundlesekennlinie 41 geänderten Steigung 47 wird entsprechend die oben genannte Empfindlichkeit 46 des Drehzahlsensors 5 erhöht.

Wie bereits erläutert, kann die Steigung 47 der Grundlesekennlinie 39 durch das magnetische Stützfeld 22 erhöht werden. Dies ist jedoch nur bis zu einem bestimmten Wert des magnetischen Stützfeldes 50 möglich. Ab dem Moment, ab dem eine intrinsische Vormagnetisierung des magnetoresistiven Messaufnehmers 19 vollständig aufgehoben ist und die tatsächliche Vormagnetisierung des magnetoresistiven Messaufnehmers 19 ihr Vorzeichen wechselt, wird die Grundlesekennlinie 41 an der Achse des Widerstandes 20 achsengespiegelt und die Steigung 47 wird negativ. Dieser Vorgang kann als Flippen des magnetoresistiven Messaufnehmers 19 und damit des Drehzahlsensors 5 bezeichnet werden und sorgt dafür, dass sich der Signalverlauf des Ausgangssignals 31 ändert.

Bei der Veränderung der Steigung 47 der Grundlesekennlinie 41 und der Einstellung einer der Kennlinien 42, 43 oder 44 darf jedoch eine Radialkomponente des magnetischen Encoderfeldes 17 nicht außer Acht gelassen werden, die ebenfalls in die Richtung des magnetischen Stützfeldes 22 wirkt. Die eingestellte Lesekennlinie 42, 43 oder 44 muss von der Achse des Widerstandes 20 einen ausreichenden Abstand aufweisen, da der magnetoresistive Messaufnehmer 19 ansonsten durch das Flippen die in Fig. 3 gezeigten Zusatzpulse 38 einbringt.

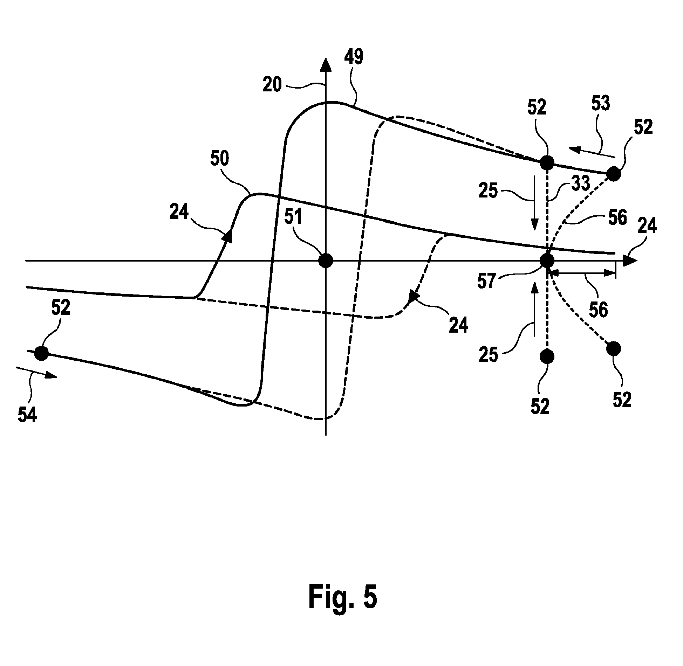

Das Flippen des magnetoresistiven Messaufnehmers 35 im Rahmen der Verwendung des Stützmagneten 21 soll nachstehend anhand der Fig. 5 bis 7 näher erläutert werden, die qualitativ den Verlauf des elektrischen Widerstandes 20 des magnetoresistiven Messaufnehmers 19 in Abhängigkeit der Radialkomponente 24 und der Tangentialkomponente 25 des Summenmagnetfeldes 23 entsprechend ohne und mit dem Stützmagneten 21 anhand einer ersten Kurve 49 und einer zweiten Kurve 50 andeuten. Der Verlauf und damit die beiden Kurven 49, 50 können anhand der Formel der Fig. 6 der WO 2007 014 947 A1 hergeleitet werden, worauf der Kürze halber nicht weiter eingegangen werden soll.

In den Fig. 5 bis 7 ist die Radialkomponente 24 des Summenmagnetfeldes 23 auf der Abszisse des gezeigten kartesischen Koordinatensystems aufgetragen, während die Tangentialkomponente 25 des Summenmagnetfeldes 23 (die in Fig. 3 als Laufvariable verwendet ist) als Formvariable angedeutet ist. Der Übersichtlichkeit halber wurde die Achse der Radialkomponente 24 (x-Achse) durch einen Punkt 51 auf der Achse des elektrischen Widerstandes 20 gelegt, der dem Symmetriepunkt aller Kurven 49, 50 entspricht. Dabei soll die Tangentialkomponente 25 des Summenmagnetfeldes 23, die für die erste Kurve mit dem Bezugszeichen 49 notwendig ist größer sein, als die Tangentialkomponente 25 des Summenmagnetfeldes 23, die für die zweite Kurve mit dem Bezugszeichen 50 notwendig ist. Damit werden die Kurven 49, 50 mit zunehmender Tangentialkomponente 25 des Summenmagnetfeldes 23 immer weiter zur Achse der Radialkomponente 24 des Summenmagnetfeldes 23 hin gestaucht.

Zunächst soll anhand von Fig. 5 der Verlauf des elektrischen Widerstandes 20 des magnetoresistiven Messaufnehmers 19 erläutert werden, ohne dass der Stützmagnet 21 verwendet wird.

Solange die Tangentialkomponente 25 des Summenmagnetfeldes 23 konstant ist, würde ein Wert 52 des elektrischen Widerstandes 20 für eine sich negativ verändernde Radialkomponente 24 des Summenmagnetfeldes 23 auf einer konstant bleibenden Kurve 49, 50 in einer Richtung entgegen der Achse der Radialkomponente 24 laufen, die mit einem Pfeil 53 angedeutet ist. Entsprechend würde der Wert 52 des elektrischen Widerstandes 20 für eine sich positiv verändernde Radialkomponente 24 des Summenmagnetfeldes 23 in der in einer Richtung in der Achse der Radialkomponente 24 laufen, die mit einem Pfeil 54 angedeutet ist. Ein derartiges Szenario ist jedoch für den vorliegenden Anwendungsfall uninteressant, weil die Änderung des magnetischen Encoderfeldes 17 in Richtung der Tangentialkomponente 25 des Summenmagnetfeldes 23 und nicht in Richtung der Radialkomponente 24 erfasst werden soll.

Im idealen Anwendungsfall des Drehzahlsensors 5 sollte bei einer Drehung des Encoderrades 13 und damit des magnetischen Encoderfeldes 17 lediglich die Tangentialkomponente 25 des Summenmagnetfeldes 23 ändern, nicht jedoch aber die Radialkomponente 24. Im Falle einer solchen konstanten Radialkomponente 24 und einer sich ändernden Tangentialkomponente 25 würde sich der Wert 52 des elektrischen Widerstandes 20 auf einer in Fig. 5 gepunktet dargestellten, geraden Kurve bewegen, die rechtwinklig zur Achse der Radialkomponente 24 verläuft. Diese Kurve ist mit dem Bezugszeichen 33 versehen, weil sich durch die Drehung des Encoderrades 13 die Tangentialkomponente 25 periodisch ändert, wodurch der Wert 52 des elektrischen Widerstandes 20 auf dieser Kurve 33 pendelt, so dass über die Zeit 34 der in Fig. 3 dargestellte gewünschte Kurvenverlauf 33 für das Ausgangssignal 31 erreicht wird.

Bei der Drehung des Encoderrades 13 bringt das magnetische Encoderfeld 17 jedoch in das Summenmagnetfeld 23 nicht nur eine periodische Änderung der Tangentialkomponente 25 sondern auch eine periodische Änderung der Radialkomponente 24 ein, so das der ideale Kurvenverlauf 33 niemals erreicht werden kann. Der Wert 52 würde sich in diesem Fall auf einer in Fig. 5 gepunktet dargestellten, elliptisch verlaufenden Kurve 56 bewegen, weil sich zusätzlich zur Tangentialkomponente 25 auch die Radialkomponente 24 mit einer gewissen Amplitude 57 ändert.

Die den Verlauf des elektrischen Widerstandes 20 zeigenden Kurven 33, 56 schneiden die Achse der Radialkomponente 24 in einem radialen intrinsischen Vormagnetisierungspunkt 57, der die Vormagnetisierung des magnetoresisitiven Messaufnehmers 19 in seiner schweren Achse darstellt.

Dieser intrinsische Vormagnetisierungspunkt 57 in der schweren Achse kann, wie in Fig. 6 gezeigt, durch den Stützmagneten 21 und sein magnetisches Stützfeld 22 auf der Achse der Radialkomponente 24 verschoben werden, so dass sich ein tatsächlicher Vormagnetisierungspunkt 58 einstellt, der entsprechend mit dem magnetischen Stützfeld 22 vom intrinsischen Vormagnetisierungspunkt 57 beabstandet ist.

Während im Rahmend der Fig. 5 bei der Änderung des Wertes 52 des elektrischen Widerstandes 20 des magnetoresistiven Messaufnehmers 19 die Radialkomponente 24 und die Tangentialkomponente 25 stets richtungsgleich wirken, gibt es im Rahmen der Fig. 6 einen Umkehrpunkt 59, ab dem die Radialkomponente 24 und die Tangentialkomponente 25 bei der Änderung des Wertes 52 des elektrischen Widerstandes 20 des magnetoresistiven Messaufnehmers 19 diametral entgegenwirken. Dadurch wird der ideale Kurvenverlauf 33 der Fig. 5 verdreht und es entsteht ein Kurvenverlauf bei dem zwei elliptische Kurvenverläufe entstehen, die zu dem tatsächlichen Signalverlauf 37 in Fig. 3 führen. Daher ist der entstehende Kurvenverlauf in Fig. 6 ebenfalls mit dem Bezugszeichen 37 versehen. Dabei bewirkt der kleinere der beiden elliptischen Kurvenverläufe die Zusatzpulse 38, die in Fig. 6 mit dem entsprechenden Bezugszeichen angedeutet sind.

Je weiter der tatsächliche Vormagnetisierungspunkt 58 durch den Stützmagneten 22 über den Umkehrpunkt 59 hinausgeschoben wird, desto größer sind die Zusatzpulse 38. Das heißt aber auch, dass mittels des Übertrittsabstandes 60 des tatsächlichen Vormagnetisierungspunktes 58 über den Umkehrpunkt 59 die Höhe der Zusatzpulse 38 eingestellt werden kann.

In Fig. 6 ist der maximal mögliche Übertrittsabstand 60 angedeutet, ab dem die Zusatzpulse 38 die Schaltschwellen 39 übertreten und somit zu der oben beschriebenen Frequenzverdoppelung des Pulssignals 39 führen würden. Im Rahmen der vorliegende Ausführung soll als Fehlersignal 40 ermittelt werden, welchen Reserve ein beliebig eingestellter tatsächlicher Vormagnetisierungspunkt 58` gegenüber dem tatsächlichen Vormagnetisierungspunkt 58 beim maximal möglichen Übertrittsabstand 60 besitzt. Dies wird im Rahmen der vorliegenden Ausführung dadurch erreicht, dass das magnetische Stützfeld 22 am beliebig eingestellten tatsächlichen Vormagnetisierungspunkt 58' mit dem magnetischen Testfeld 29 zu verändern, bis der maximal mögliche Übertrittsabstand 60 erreicht ist und der oben beschriebene Frequenzsprung detektiert werden kann. Der Höhe des magnetischen Testfeldes 29 bei diesem Frequenzsprung ist dann unmittelbar die Reserve zu entnehmen, die dann in dem Fehlersignal 40 an den Regler 9 gesendet werden kann. Ist die Reserve gleich Null oder sogar negativ, dann liegt bereits unmittelbar ein Fehler vor.

Neben dem Frequenzsprung ist es selbstverständlich auch möglich, andere den Fehler für das magnetische Stützfeld beschreibende vorbestimmte Bedingungen zu prüfen, wann der maximal mögliche Übertrittsabstand 60 erreicht ist.

An dieser Stelle sei darauf hingewiesen, dass sich der in Fig. 6 gezeigte Kurvenverlauf 33 an der Achse des elektrischen Widerstandes 20 spiegelt, wenn die intrinsische Vormagnetisierung 57 mit dem magnetischen Stützfeld 22 soweit erhöht wird, dass der gesamte Kurvenverlauf 33 auf die andere Seite der Achse des elektrischen Widerstandes 20 geschoben wird.

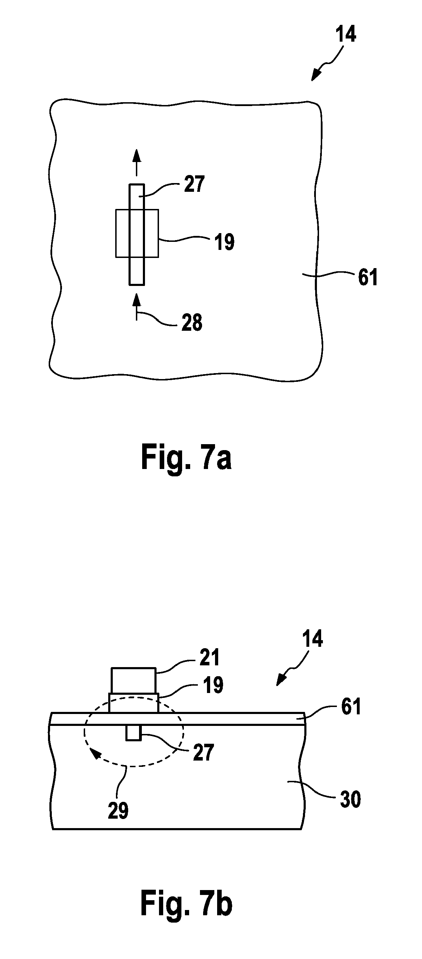

Es wird auf die Fig. 7a und 7b Bezug genommen, die entsprechend den Lesekopf 14 des Drehzahlsensors 5 aus Fig. 1 mit dem Teststromleiter 27 in einer Seitenansicht und den Lesekopf 14 der Fig. 7a mit dem Teststromleiter 27 in einer Seitenansicht zeigen.

In den Lesekopf 14 könnte die Signalaufbereitungsschaltung 30 integriert sein, die in der vorliegenden Ausführung in an sich bekannter Weise als Halbleiterchip ausgeführt ist. In diese Signalaufbereitungsschaltung 30 ist der den Teststrom 28 führende Testleiter 27 integriert, der so basierend auf dem Teststrom 28 das magnetische Testfeld 27 erregen kann. Da der Teststrom 28 in bekannter Weise in den Testleiter 27 eingetragen werden kann, ist seine Höhe und damit auch die Höhe des magnetischen Testfeldes 29 bekannt, so dass die Testvorrichtung 26 mit dem Teststrom 28 das zuvor beschriebene Testverfahren durchführen und die Reserve für das Fehlersignal 40 bestimmen kann.

Es wäre prinzipiell auch möglich, die Signalaufbereitungsschaltung 30 das zuvor genannte Testverfahren durchführen zu lassen. Im Fehlerfall könnte sie dann alternativ oder zusätzlich zum Pulssignal 32 das Fehlersignal 40 ausgeben.

In der vorliegenden Ausführung ist der Messaufnehmer 19 auf einer Passvierungsschicht 61 der Signalaufbereitungsschaltung 38 ausgebildet, so dass der Testleiter 27 direkt unterhalb dem Messaufnehmer 19 angeordnet werden kann.

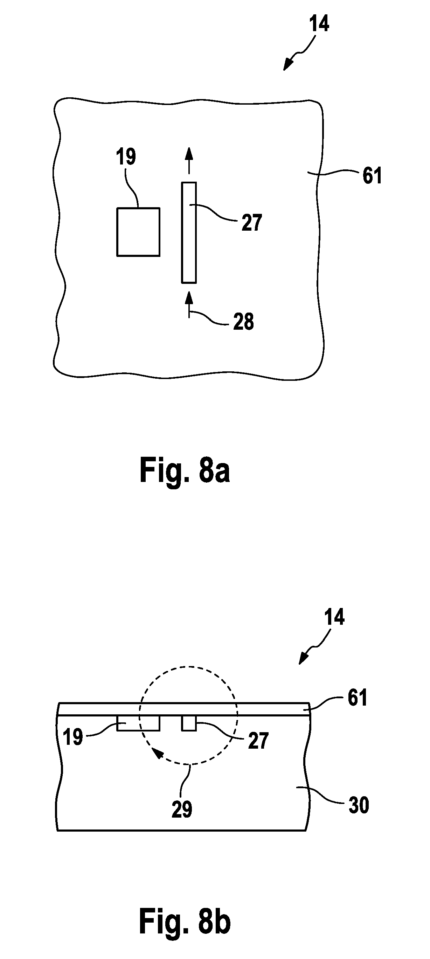

Es wird auf die Fig. 8a und 8b Bezug genommen, die entsprechend den Lesekopf 14 des Drehzahlsensors 5 aus Fig. 1 mit einem alternativen Teststromleiter 27 in einer Seitenansicht und den Lesekopf 14 der Fig. 8a mit dem Teststromleiter 27 in einer Seitenansicht zeigen.

In der Fig. 8 ist der Messaufnehmer 19 mit in die Signalaufbereitungsschaltung 30 integriert. Hier kann der Testleiter 27 auch neben dem Messaufnehmer 19 derart angeordnet werden, dass das magnetische Feld 29 noch vom Messaufnehmer 19 erfasst werden kann.

Da der Messaufnehmer 19 und der Testleiter 27 unabhängig von der Ausführung örtlich sehr nah aneinander angeordnet werden können, kann das magnetische Feld 29 und damit der Teststrom 28 sehr klein ausgebildet werden.

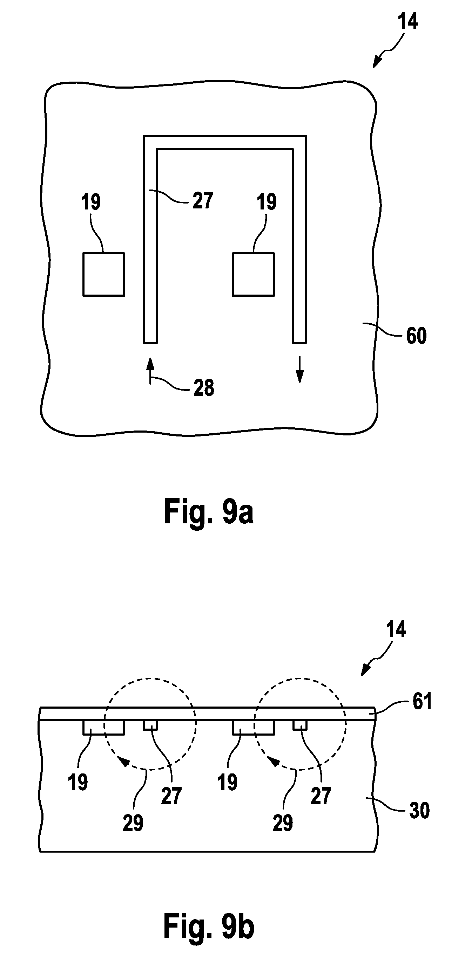

Es wird auf die Fig. 9a und 9b Bezug genommen, die entsprechend den Lesekopf 14 des Drehzahlsensors 5 aus Fig. 1 mit einem noch alternativen Teststromleiter 27 in einer Seitenansicht und den Lesekopf 19 der Fig. 9a mit dem Teststromleiter 27 in einer Seitenansicht zeigen.

In der Fig. 9a und 9b ist der Lesekopf 14 als an sich bekannter, die Drehzahl 6 über ein Differenzfeld messender Lesekopf 14 ausgebildet. Der Testleiter 27 ist in dieser Ausführung U-förmig auf der Signalaufbereitungsschaltung 30 verlegt, wobei die einzelnen Messaufnehmer 19 an den Schenkeln des U-förmigen Testleiters 27 angeordnet werden.

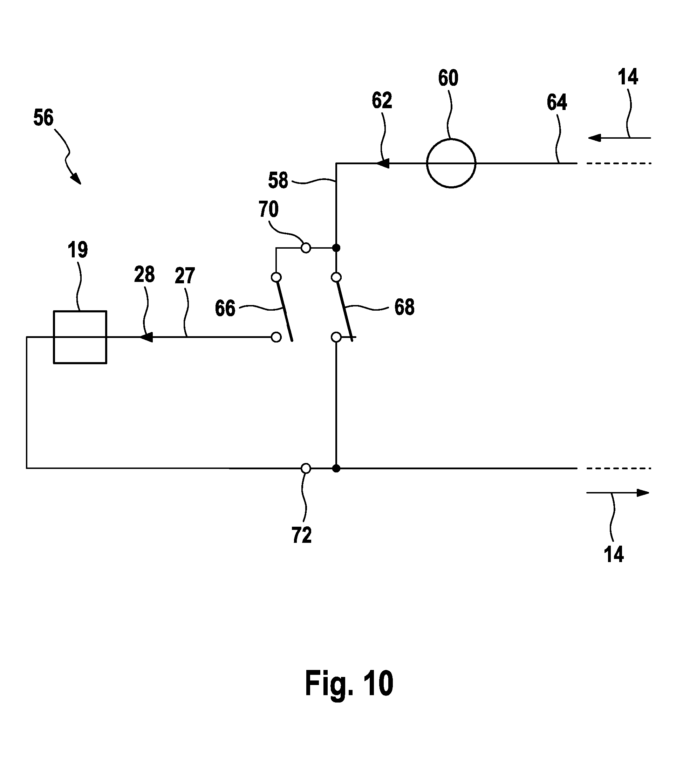

In Fig. 10 ist eine Schaltung 56 zur Bestromung des Teststromleiters 48 der Fig. 3a bis 5b gezeigt.

Die Schaltung 56 ist in der vorliegenden Ausführung an eine Versorgungsleitung 58 einer in der vorliegenden Ausführung als Stromquelle 60 ausgeführten elektrischen Energieversorgungsquelle angeschlossen. Die Stromquelle 60 gibt einen Versorgungsstrom 62 ab, der den oben genannten Lesekopf 19 mit elektrischer Energie versorgt. Die Schaltung 56 kann alternativ auch an eine Rückleitung 64 zu dieser Stromquelle 60 angeschlossen sein.

In der vorliegenden Ausführung weist die Schaltung 56 einen Schließer 66 auf, der die Schaltung 56 parallel an die Versorgungsleitung 58 anschließt. Dieser Schließer 66 kann von einer den Messaufnehmer 50 testenden Einrichtung, wie beispielsweise der Regler 9 oder der Signalaufbereitungsschaltung 30 angesteuert werden. Wird der Schließer 66 geschlossen, fließt ein Teil des Versorgungsstromes 62 durch den Teststromleiter 27 als Teststrom 46 und erzeugt so das oben genannte magnetische Feld 52.

Um den Teststrom 48 weiter zu verstärken kann nach den Schließen des Schließers 66 ein parallel zur Schaltung 56 geschaltener Öffner 68 geöffnet werden, so dass der gesamte Versorgungsstrom 62 als Teststrom 28 durch den Teststomleiter 27 fließt. Auf diese Weise kann mit dem Versorgungsstrom 62 ein maximal mögliches Testfeld 29 aufgebaut werden.

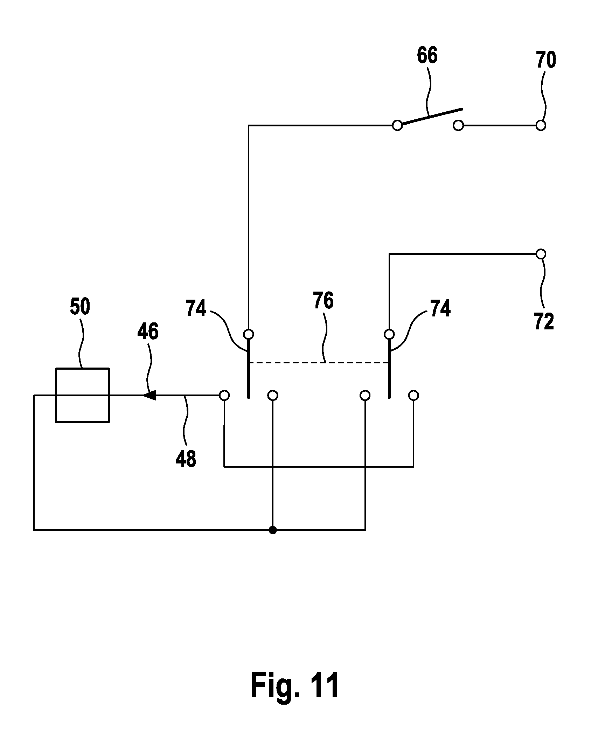

In Fig. 11 ist in einer Weiterbildung der Schaltung 56 gezeigt.

In Fig. 11 wird die Schaltung 56 als von zwei in Fig. 6 gezeigten Klemmen 70, 72 aus beginnend angedeutet. Optional kann der Öffner 65 dabei als zu Schaltung 56 zugehörig oder nicht zugehörig dazugezählt werden.

In Fig. 11 weist die Schaltung zwei Umschalter 74 auf, die über ein gemeinsames Steuersignal 76 angesteuert werden, das beispielsweise aus der magnetoresistive Messaufnehmer 19 testenden Einrichtung, wie beispielsweise der Regler 9 oder der Signalaufbereitungsschaltung 38 ausgegeben werden kann.

Der magnetoresistive Messaufnehmer 19 beziehungsweise der Lesekopf 14 können mit jeder beliebigen Form für den Teststrom 28 getestet werden, solange dieser Teststrom 28 das magnetische Testfeld 29 aufbaut. Auf das angelegte magnetische Testfeld 29 kann der magnetoresistive Messaufnehmer 19 in einer vorbestimmten Weise mit einem Fehler reagieren, was beim Testen abgeprüft werden kann.

## Patentansprüche

1. Verfahren zum Untersuchen eines magnetischen Stützfeldes (22) in einem Drehzahlsensor (5), das eingerichtet ist, eine Vormagnetisierung (57) eines magnetoresitiven Messaufnehmers (14) in einer schweren Achse des magnetoresitiven Messaufnehmers (14) zu schwächen, wobei der magnetoresistive Messaufnehmer (14) eingerichtet ist, seinen elektrischen Widerstand (20) in Abhängigkeit eines sich in Richtung seiner leichten Achse mit einer zu erfassenden Drehzahl (6) drehenden Encoderrades (13) zu ändern, umfassend:
- Beaufschlagen eines magnetischen Testfeldes (29) auf das magnetische Stützfeld (22), und
- Untersuchen des beaufschlagten magnetischen Stützfeldes (22) basierend auf einer Gegenüberstellung eines vom elektrischen Widerstand (20) des magnetoresitiven Messaufnehmers (14) abhängigen Ausgangssignals (31) und einer einen Fehler (38, 39) für das magnetische Stützfeld (22) beschreibenden vorbestimmten Bedingung (38, 39).

2. Verfahren nach Anspruch 1, wobei die Abhängigkeit des elektrischen Widerstandes (20) des magnetoresistiven Messaufnehmers (14) vom Encoderrad (13) einen Umkehrpunkt (59) besitzt, ab dem eine Änderung des elektrischen Widerstandes (20) in Abhängigkeit eines magnetischen Encoderfeldes (17) des Encoderrades (13) in Richtung der schweren Achse gegenüber einer Änderung des elektrischen Widerstandes (20) in Abhängigkeit des magnetischen Encoderfeldes (17) in Richtung der leichten Achse sein Vorzeichen ändert.

3. Verfahren nach Anspruch 1 oder 2, wobei zum Untersuchen des magnetischen Stützfeldes (22) das magnetische Testfeld (29) variiert wird, bis das Ausgangssignal (31) die vorbestimmte Bedingung (38, 39) erfüllt.

4. Verfahren nach Anspruch 3, umfassend Ausgeben eines eine Lage des magnetischen Stützfeldes (22) gegenüber dem magnetoresistiven Messaufnehmer (14) beschreibenden Reservewertes (40), der von der Höhe des magnetischen Testfeldes (22) bei der Erfüllung der vorbestimmten Bedingung (38, 39) durch das Ausgangssignal (31) abhängig ist.

5. Verfahren nach einem der vorstehenden Ansprüche, wobei während des Untersuchens des magnetischen Stützfeldes (22) an den magnetoresistiven Messaufnehmer (14) in Richtung der leichten Achse wirkendes magnetisches Wechselfeld (17) angelegt wird, das zu einem periodischen Ausgangssignal (31) führt, wobei die vorbestimmte Bedingung (38, 39) ein Frequenzsprung in dem periodischen Ausgangssignal (31) ist.

6. Verfahren nach Anspruch 5, wobei das magnetische Wechselfeld ein magnetisches Encoderfeld (17) des Encoderrades (13) des Drehzahlsensors (5) ist.

7. Verfahren nach einem der vorstehenden Ansprüche, umfassend:
- Erregen des magnetischen Testfeldes (29) basierend auf einem elektrischen Strom (28) durch einen elektrischen Testleiter (27).

8. Vorrichtung (26), die eingerichtet ist, ein Verfahren nach einem der vorstehenden Ansprüche durchzuführen.

9. Vorrichtung nach Anspruch 8, umfassend den elektrischen Testleiter (27).

10. Drehzahlsensor (5), insbesondere Raddrehzahlsensor, umfassend
- einen magnetischen Encoder (13) zum Erregen eines magnetischen Encoderfeldes (17) in Abhängigkeit einer zu erfassenden Drehzahl (6),
- einen Lesekopf (14) mit einem magnetostriktiven Messaufnehmer (19) zum Abgeben eines Ausgangssignals (31) in Abhängigkeit des magnetischen Encoderfeldes (17) und des magnetostriktiven Messaufnehmers (19),
- einen ein magnetisches Stützfeld (22) erregenden Stützmagneten (21), der eine Empfindlichkeit des magnetostriktiven Messaufnehmers (19) beeinflusst, und
- eine Vorrichtung (26) nach Anspruch 8 oder 9.
